(19) Europäisches Patentamt
European Patent Office
Office européen des brevets

(11) Veröffentlichungsnummer: **0 014 315**
**B1**

(12) # EUROPÄISCHE PATENTSCHRIFT

(45) Veröffentlichungstag der Patentschrift: **15.06.83**

(51) Int. Cl.³: **C 08 F 210/00,** C 08 F 4/64 // (C08F210/00, 216/02, 220/04)

(21) Anmeldenummer: **80100059.7**

(22) Anmeldetag: **07.01.80**

(54) **Verfahren zur Herstellung von polare Gruppen enthaltenden Alpha-Olefin-Copolymeren und erhaltene Copolymere.**

(30) Priorität: **17.01.79 DE 2901646**

(43) Veröffentlichungstag der Anmeldung: **20.08.80 Patentblatt 80/17**

(45) Bekanntmachung des Hinweises auf die Patenterteilung: **15.06.83 Patentblatt 83/24**

(84) Benannte Vertragsstaaten: **DE FR GB IT**

(56) Entgegenhaltungen:
**DE-A-1 917 230**
**DE-A-1 947 109**
**DE-A-1 947 590**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Arlt, Klaus-Peter, Dr., Anton-Aulke-Ring 9, D-4401 Senden (DE)**
Erfinder: **Binsack, Rudolf, Dr., Bethelstrasse 4a, D-4150 Krefeld (DE)**
Erfinder: **Grigo, Ulrich, Dr., Steinstrasse 161, D-4150 Krefeld (DE)**
Erfinder: **Neuray, Dieter, Dr., Buschstrasse 149, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 014 315 B1

BUNDESDRUCKEREI BERLIN

Verfahren zur Herstellung von polare Gruppen enthaltenden $\alpha$-Olefin-Copolymeren und erhaltene Copolymere

Gegenstand der Erfindung sind Copolymere aus $\alpha$-Olefinen der Formel (A)

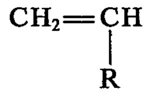

(A)

worin

R Wasserstoff, Alkyl mit 1 bis 16 C-Atomen oder Phenyl bedeutet und
(B) Allylalkohol als eine polare Gruppe enthaltendes $\alpha$-Olefin,

wobei in den Copolymeren 1 bis 50 Gew.-% Monomer (B) einpolymerisiert enthalten sind, und sie einen Melt-Flow-Index 230/5 von 2 bis 20 g/10 Min. besitzen.

Ein weiterer Gegenstand der Erfindung ist ein Verfahren zur Herstellung von Copolymeren aus $\alpha$-Olefinen der Formel (A) und (B) Allylalkohol, das dadurch gekennzeichnet ist, daß man in Suspension in einem inerten Lösungsmittel ein oder mehrere $\alpha$-Olefine (A) mit einer Verbindung des Allylalkohols (B) mit Aluminium sowie Halogen und/oder Alkyl entsprechend der Formel $[Ch_2{=}CH{-}CH_2{-}O]_xAlA_y$ mit A = Halogen und/oder Alkyl, sowie mit x und y = ganze Zahlen, deren Summe 3 ist, in Anwesenheit eines Katalysators aus einem festen katalytischen Komplex auf Basis $TiCl_3$ der allgemeinen Formel

$$TiCl_3 \cdot (AlR^5_{n'}X_{3-n'})_x \cdot (C)_y$$

worin
$R^5$ ein Kohlenwasserstoff mit 1—18 C-Atomen
X ein Halogenatom (Chlor)
n' eine Zahl, so daß $0 \leq n' \leq 2$
C ein Komplex bildendes Mittel
x eine Zahl kleiner 0,3
y eine Zahl größer 0,001

ist, und einer Aluminiumverbindung der Formel

$$AlR^6_nX_{3-n}$$

worin

$R^6$ $C_1-C_{18}$-Alkyl,
X Halogen, bevorzugt Chlor, und
n = $0 < n \leq 3$

ist, umsetzt und anschließend das Reaktionsgemisch mit einem Alkohol/Salzsäure-Gemisch behandelt.

Die Homopolymerisation von $\alpha$-Olefinen und die Copolymerisation von $\alpha$-Olefinen untereinander mit Ziegler-Natta-Katalysatoren sind bekannt. Die vom olefinischen Charakter dieser Polymeren herrührenden Eigenschaften wie Wasserbeständigkeit, chemische Resistenz gegen Säuren und Alkalien sind im allgemeinen von Vorteil, jedoch sind durch das Fehlen polarer Gruppen auch Nachteile vorhanden, wie geringe Anfärbbarkeit, geringes Haftvermögen, geringe Bedruckbarkeit, geringe Mischbarkeit mit anderen, insbesondere mit polare Gruppen enthaltenden Polymeren. Reine Polyolefine laden sich leichter elektrostatisch auf und ziehen Staub- und Schmutzpartikel an.

Es ist bekannt, Copolymerisate aus Olefinen und polare Gruppen enthaltenden ungesättigten Monomeren durch radikalische Polymerisation herzustellen, jedoch können nach diesem Verfahren kristalline Copolymere nicht erhalten werden, wenn Olefine mit mehr als zwei Kohlenstoffatomen verwendet werden. Außerdem wird bei der radikalischen Copolymerisation mit höheren $\alpha$-Olefinen kein ausreichend hoher Polymerisationsgrad erreicht.

Die Copolymerisation mit $\alpha$-Olefinen mit polare Gruppen enthaltenden $\alpha$-Olefinen unter Verwendung von Ziegler-Natta-Katalysatoren ist prinzipiell ebenfalls bekannt. Jedoch wird im allgemeinen die Aktivität der Katalysatoren erheblich herabgesetzt.

Beispiele für Verfahren zur Copolymerisation von $\alpha$-Olefinen mit polare Gruppen enthaltenden ethylenisch ungesättigten Monomeren sind im J. Polym. Sci., Part A-1, 9, 471 bis 483 (1971), in DE-OS 1 947 109 und in GB-PS 1 505 480 beschrieben.

So kann man Propylen-Acrylsäure-Copolymere mit einem Katalysator aus $TiCl_3$/Diethylaluminiumchlorid durch Copolymerisation von Propylen und der Verbindung

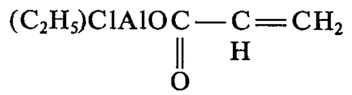

herstellen. Nach dieser Methode hergestellte Copolymere haben einen in siedender konzentrierter Salzsäure löslichen Anteil von 54% und lassen sich nur in einer spezifischen Ausbeute von ca. 30 bis 50 g Polymer/g Ti · h · bar darstellen.

Nach dem in der DE-OS 1 947 109 beschriebenen Verfahren werden Copolymere aus $\alpha$-Olefineinheiten und Einheiten der Formel

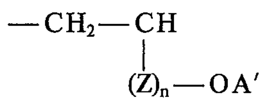

hergestellt, wobei Z eine zweiwertige Methylengruppe darstellt, n = 2 bis 15 ist und A' ein Wasserstoffatom oder eine Acylgruppe bedeutet. Dabei wird das polare Comonomere in Form einer Metallverbindung der Formel

$$(CH_2{=}CH{-}Z{-}O)_nMA_m$$

eingesetzt, in der Z eine zweiwertige Kohlenwasserstoffgruppe mit 2 bis 15 Kohlenstoffatomen, A ein Halogenatom und/oder eine einwertige Kohlenwasserstoffgruppe, M ein Metall aus den Gruppen I—IV des Periodensystems und n und m ganze Zahlen bedeuten, so daß die Summe aus n+m der Wertigkeit des Metalls entspricht. Als Katalysator wird eine Halogenverbindung des Titans oder des Vanadiums eingesetzt, als Cokatalysator wirkt entweder die Metallverbindung $(CH_2{=}CH{-}Z{-}O)_nMA_m$, falls sie Alkylgruppen enthält, anderenfalls werden Aluminium- oder Zinkalkyle zugesetzt.

Die spezifischen Ausbeuten an Copolymeren, gemessen in g Polymer/g Ti · h · bar (Propylen), liegen zwischen 10 und 70.

Das in GB-PS 1 505 480 beschriebene Verfahren zur Synthese von Copolymeren ist ein Zweistufenprozeß, der zu blockartig aufgebauten Copolymeren der Struktur [Poly-$\alpha$-Olefin]-[Polyvinylverbindung] führt. In einer ersten Stufe wird nach bekannten Verfahren mit Ziegler-Natta-Katalysatoren ein $\alpha$-Olefin polymerisiert, in einer zweiten an die noch aktiven Polyolefinenden die Vinylverbindung, bevorzugt Acrylate und Methacrylate, bei gleichzeitiger Anwesenheit von Phosphinen und halogenierten Kohlenwasserstoffen als Co-Komponenten angelagert.

Nach dieser Methode sind mit Ethylen als Olefinkomponente Copolymere mit 30 bis 40% Methylmethacrylat darstellbar bei einem Homopolymeranteil des Methylmethacrylaten von ungefähr 5%, mit Propylen als Olefinkomponente enthält das Copolymer ca. 0,5 Gew.-% Methylmethacrylat, 2,6 Gew.-% liegen in Form von Homopolymer vor bei einer spezifischen Ausbeute von ungefähr 10 bis 30 g Polymer/g Ti · h · bar.

Das erfindungsgemäße Verfahren dagegen ermöglicht bei erhöhter Ausbeute den Einsatz von Allylalkohol als polare Gruppen enthaltendes $\alpha$-Olefin (B).

Allylalkohol (B) kann in die Aluminiumverbindung umgewandelt werden durch Umsetzung mit einer aluminiumorganischen Verbindung der Formel (C)

$$AlR^6_nX_{3-n} \qquad (C)$$

in der $R^6 = C_1-C_{18}$-Alkyl, X = Halogen, vorzugsweise Chlor ist und n eine ganze Zahl mit $0 < n \leq 3$.

Geeignete Aluminiumverbindungen sind z. B. Triethylaluminium, Triisopropylaluminium, Tri-n-butylaluminium und partiell halogenierte Aluminiumverbindungen wie Ethylaluminiumdichlorid, Diethylaluminiumchlorid, Diethylaluminiumbromid, Diethylaluminiumjodid. Besonders vorteilhaft ist Diethylaluminiumchlorid.

Diese Umwandlung kann in einem inerten Lösungsmittel durchgeführt werden, indem man die Lösung des Allylalkohols (B) in eine Lösung der Organoaluminium-Verbindung im molaren Verhältnis von 1 : 1 unter Rühren bei Raumtemperatur zutropft. Auf diese Weise wird nur ein Alkylrest der Organoaluminium-Verbindung substituiert und 1 Mol Kohlenwasserstoff freigesetzt. Geeignete Lösungsmittel sind Aliphaten und Cycloaliphaten mit 5—18 C-Atomen sowie chlorierte Kohlenwasserstoffe und Aromaten. Zum Beispiel eignen sich Pentan, Hexan, Heptan, Octan, Decan, Cyclohexan, Methylcyclohexan, Benzol, Toluol, Xylol, Ethylbenzol, Benzylchlorid, Dichlorethan. Besonders geeignet ist Isooctan.

Die genannten Lösungsmittel sind zugleich geeignet als Suspensionsmedium für die Polymerisation der Metallate des Allylalkohols (B) mit $\alpha$-Olefinen (A). Geeignete $\alpha$-Olefine (A) sind z. B. Ethylen, Propylen, Buten-1, Penten-1, Hexen-1, Undecen-1, 4-Methyl-penten-1 und Gemische daraus.

Die Polymerisation kann bei Temperaturen von 20 bis 100°C, vorzugsweise 60 bis 90°C, und bei Partialdrucken der Monomeren von 1—30 bar durchgeführt werden. Der feste katalytische Komplex

auf Basis $TiCl_3$ kann in einer Konzentration von 0,1—500 mMol/l, vorzugsweise 1—50 mMol/l, verwendet werden. Cokatalysatoren sind die Aluminiumorganyle der Formel (C). Im allgemeinen beträgt das Mol-Verhältnis Aluminiumorganyl zu $TiCl_3$-Komplex = 1 : 1 bis 100 : 1, bevorzugt 5 : 1 bis 20 : 1, besonders vorteilhaft 8 : 1 bis 12 : 1.

Zur Durchführung der Polymerisation können Katalysator und Cokatalysator vorteilhaft zunächst in etwa dem zehnten Teil des gesamten Lösungsmittels in einem dem Reaktionsgefäß vorgeschalteten Gefäß vereinigt werden; anschließend wird die erhaltene Suspension dem restlichen Lösungsmittel zugefügt, in welchem sich das $\alpha$-Olefin (B) als Metallverbindung befindet. Das molare Verhältnis von Allylalkohol (B)-Metallat zu $TiCl_3$-Komplex ist im allgemeinen 0,1 bis 100, insbesondere 20 bis 80. Zur Regulierung des Molekulargewichts kann Wasserstoff zugesetzt werden. Zu dem im Reaktionsgefäß befindlichen Katalysator, Cokatalysator, Allylalkohol (B) als Metallverbindung und Lösungsmittel wird nach Einstellen der gewünschten Polymerisationstemperatur $\alpha$-Olefin (A) bis zum Erreichen des gewünschten Druckes aufgedrückt. Durch ständiges Nachrücken von $\alpha$-Olefin (A) wird dieser Druck konstant gehalten.

Nach der Polymerisation kann der Katalysator mit einem Alkohol/Salzsäure-Gemisch desaktiviert werden, wodurch Allylalkoholgruppen enthaltende Poly-$\alpha$-Olefine erhalten werden.

Als Katalysatorbestandteil wird ein fester katalytischer Komplex auf Basis $TiCl_3$, kurz $TiCl_3$-Komplex, benutzt. Dies ist ein Produkt der allgemeinen Formel

$$TiCl_3 \cdot (AlR^5_{n'}X_{3-n'})_x \cdot (C)_y$$

worin
- $R^5$ ein Kohlenwasserstoff mit 1—18 C-Atomen,
- X ein Halogenatom (Chlor),
- n' eine Zahl, so daß $0 \leq n' \leq 2$,
- C ein Komplex bildendes Mittel,
- x eine Zahl kleiner 0,3,
- y eine Zahl größer 0,001

ist.

Diese Produkte und ihre Herstellung sind in der DE-OS 2 213 086 beschrieben.

Da die Copolymeren die gemäß der Erfindung beschriebenen funktionellen Gruppen besitzen, weisen sie antistatische Eigenschaften sowie ein gutes Haftvermögen und Bedruckbarkeit auf.

Die Erfindung wird durch folgende Beispiele erläutert:

## Herstellung des katalytischen $TiCl_3$-Komplexes

In einen 250-ml-Kolben wurden 60 ml getrocknetes und von Sauerstoff befreites Isooctan und 15 ml frisch destilliertes $TiCl_4$ (0,136 Mol) gegeben. Anschließend wurden 31,5 ml Ethylaluminiumsesquichlorid (0,139 Mol) in 80 ml Isooctan bei 0°C während 1 h unter langsamem Rühren tropfenweise zugegeben. Nach beendeter Zugabe wurde noch 1 h bei 0°C gerührt und das rotbraune Reaktionsprodukt bei 0°C abfiltriert und dreimal mit je 100 ml vorgekühltem Isooctan bei 0°C gewaschen. Der reduzierte Feststoff wurde in 100 ml Isooctan suspendiert, unter Rühren auf 65°C aufgeheizt und 1 h bei 65°C gerührt. Nach Abkühlen auf Raumtemperatur wurde noch einmal mit 100 ml Isooctan gewaschen und dann in 170 ml Isooctan suspendiert. Jetzt wurden 25 ml (0,123 Mol) Diisoamylether zugegeben, 1 h bei Raumtemperatur und 1 h bei 35°C gerührt. Anschließend wurde der behandelte Feststoff dreimal mit je 100 ml Isooctan gewaschen und in 100 ml Isooctan suspendiert. Zu der Suspension wurden 60 ml $TiCl_4$ zugegeben, auf 65°C erwärmt und 4 h bei dieser Temperatur gerührt.

Nach Beendigung der Reaktion wurde der katalytische Komplex 5mal mit je 100 ml Isooctan gewaschen und in 150 ml Isooctan suspendiert. Die Konzentration der Suspension an $TiCl_3$ wurde durch Titration mit Cer(IV)-sulfat bestimmt.

## Polymerisation von Propylen in Isooctan

Ein 2-Ltr.-Glasautoklav wurde mehrfach evakuiert und mit Argon gefüllt. Es wurden 800 ml Isooctan vorgelegt und anschließend eine Suspension von 250 mg der oben beschriebenen Katalysatorkomponente und 2,01 ml Diethylaluminiumchlorid (Al/Ti 10 : 1) in 200 ml Isooctan durch eine Membranpumpe zugepumpt. Die Polymerisation wurde 1 h bei 70°C unter einem Propylendurck von 4 bar durchgeführt. Der Druck wurde durch ständiges Nachdrücken von Propylen konstant gehalten. Am Ende der Reaktion wurde überschüssiges Propylen abgeblasen und die Polymersuspension mit einem Überschuß eines Methanol-Butanol-Gemisches behandelt. Nach Abfiltrieren und Trocknen des Polymeren bei 100°C im Vakuum wurden 208 g Polypropylen erhalten, das einen in siedendem n-Heptan unlöslichen Anteil von 96,4% hatte. Dies entspricht einer spezifischen Ausbeute von 208 g PP/g $TiCl_3 \cdot h \cdot bar$.

## Beispiel

Zu einer Lösung von 28,0 ml Diethylaluminiumchlorid ≙ 0,225 Mol in 300 ml Isooctan werden bei Raumtemperatur 15,4 ml Allylalkohol ≙ 0,225 Mol in 300 ml Isooctan unter Rühren zugetropft, anschließend läßt man eine Stunde bei 70°C nachreagieren. Die Lösung wird dann in den Reaktionsautoklaven überführt. In einem dem Autoklaven vorgeschalteten Reaktionsgefäß werden 0,25 g $TiCl_3$-Komplex ≙ 1,6 mMol mit 20 ml einer 10%igen Lösung von Diethylaluminiumchlorid in 50 ml Isooctan kontaktiert und die so erhaltene Suspension in den Reaktionsautoklaven gepumpt. Nach Erreichen der Polymerisationstemperatur von 70° C wird 1 Std. bei 4 bar Propylendruck polymerisiert, wobei der Druck durch ständiges Nachdrücken von Propylen konstant gehalten wird. Am Ende der Polymerisation wird nicht umgesetztes Propylen abgeblasen und die Polymersuspension mit einem Überschuß eines Methanol/n-Butanol/Salzsäure-Gemisches behandelt. Es werden 100 g Mischpolymerisat erhalten mit einem Comonomergehalt von 4 Gew.-% und einem isotaktischen Anteil von 98%. Dies entspricht einer spezifischen Ausbeute von 320 g PP-Copolymer/g Ti · h · bar. Das Produkt hat einen Melt-Flow-Index (MSI 230/5) von 10 g/10 Minuten.

## Patentansprüche

1. Copolymere aus α-Olefinen der Formel (A)

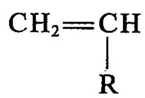

(A)

worin

R Wasserstoff, Alkyl mit 1 bis 16 C-Atomen oder Phenyl bedeutet und
(B) Allylalkohol als eine polare Gruppe enthaltendes α-Olefin,

wobei in den Copolymeren 1 bis 50 Gew.-% Monomer (B) einpolymerisiert enthalten sind, und sie einen Melt-Flow-Index 230/5 von 2 bis 20 g/10 Min. besitzen.

2. Verfahren zur Herstellung von Copolymeren aus α-Olefinen der Formel (A) und (B) Allylalkohol gemäß Anspruch 1, dadurch gekennzeichnet, daß man in Suspension in einem inerten Lösungsmittel ein oder mehrere α-Olefine (A) mit einer Verbindung des Allylalkohols (B) mit Aluminium sowie Halogen und/oder Alkyl entsprechend der Formel $[CH_2{=}CH{-}CH_2{-}O]_xAlA_y$ mit A = Halogen und/oder Alkyl sowie mit x und y = ganze Zahlen, deren Summe 3 ist, in Anwesenheit eines Katalysators aus einem festen katalytischen Komplex auf Basis $TiCl_3$ der allgemeinen Formel

$$TiCl_3 \cdot (AlR^5_{n'}X_{3-n'})_x \cdot (C)_y$$

worin
- $R^5$ ein Kohlenwasserstoff mit 1—18 C-Atomen
- X ein Halogenatom (Chlor)
- n' eine Zahl, so daß $0 \leq n' \leq 2$
- C ein Komplex bildendes Mittel
- x eine Zahl kleiner 0,3
- y eine Zahl größer 0,001

ist, und einer Aluminiumverbindung der Formel

$$AlR^6_nX_{3-n}$$

worin

- $R^6$ $C_1-C_{18}$-Alkyl,
- X Halogen, bevorzugt Chlor, und
- n = $0 < n \leq 3$

ist, umsetzt und anschließend das Reaktionsgemisch mit einem Alkohol/Salzsäure-Gemisch behandelt.

**Claims**

1. Copolymers of $\alpha$-olefins of the formula (A)

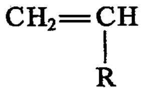 (A)

wherein

R denotes hydrogen, alkyl with 1 to 16 C atoms or phenyl, and

(B) allyl alcohol as an $\alpha$-olefin containing a polar group, 1 to 50% by weight of monomer (B) being incorporated by polymerisation in the copolymers which have a melt flow index 230/5 of 2 to 20 g/10 min.

2. Process for the production of copolymers of $\alpha$-olefins of the formula (A) and (B) allyl alcohol according to claim 1, characterised in that one or more $\alpha$-olefins (A) are reacted in suspension in an inert solvent with a compound of the allyl alcohol (B) containing aluminium and halogen and/or alkyl and corresponding to the formula

$[CH_2=CH-CH_2-O]_xAlA_y$

in which

A = halogen and/or alkyl and
x and y = integers the sum of which is 3,

in the presence of a catalyst consisting of a solid catalyst complex based on $TiCl_3$ of the general formula

$TiCl_3 \cdot (AlR^5_{n'}X_{3-n'})_x \cdot (C)_y$

wherein

$R^5$ is a hydrocarbon containing 1—18 C atoms,
X is a halogen atom (chlorine),
n' is a number such that $0 \leq n' \leq 2$,
C is a complex-forming agent,
x is a number smaller than 0.3, and
y is a number larger than 0.001,

and an aluminium compound of the formula

$AlR^6_nX_{3-n}$

wherein

$R^6$ is $C_1-C_{18}$-alkyl,
X is halogen, preferably chlorine, and
n $= 0 < n \leq 3$,

and the reaction mixture is then treated with an alcohol/hydrochloric acid mixture.

**Revendications**

1. Copolymères d'$\alpha$-oléfines de formule (A)

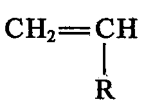 (A)

dans laquelle
R représente l'hydrogène ou un groupe alkyle en $C_1-C_{16}$ ou phényle, et
(B) d'alcool allylique comme $\alpha$-oléfine contenant un groupe polaire, les copolymères contenant 1 à

50% en poids de monomère (B) polymérisé, et ayant un indice de fusion 230/5 de 2 à 20 g/10 min.

2. Procédé pour la fabrication de copolymères d'$\alpha$-oléfines de formule (A) et (B) d'alcool allylique, qui est caractérisé en ce que l'on fait réagir en suspension dans un solvant organique inerte une ou plusieurs $\alpha$-oléfines (A) avec un composé de l'alcool allylique (B) avec l'aluminium et un halogène et/ou un groupe alkyle correspondant à la formule $[CH_2{=}CH{-}CH_2{-}O]_xAlA_y$, dans laquelle A est un halogène et/ou un groupe alkyle et x et y sont des nombres entiers dont la somme est égale à 3, en présence d'un catalyseur constitué par un complexe catalytique solide à base de $TiCl_3$ de formule générale

$$TiCl_3 \cdot (AlR^5_{n'}X_{3-n'})_x \cdot (C)_y$$

dans laquelle

- $R^5$ est un hydrocarbure en $C_1{-}C_{18}$,
- X est un atome d'halogène (chlore),
- n' est un entier compris entre 0 et 2 inclus,
- C est un agent complexant,
- x est un entier inférieur à 0,3,
- y est un entier supérieur à 0,001

et d'un composé d'aluminium de formule

$$AlR^6_nX_{3-n}$$

dans laquelle

- $R^6$ est un groupe alkyle en $C_1{-}C_{18}$,
- X est un halogène, de préférence le chlore, et
- n est un entier compris positif inférieur ou égal à 3,

et ensuite on traite le mélange de réaction par un mélange alcool/acide chlorhydrique.